# EUROPEAN PATENT SPECIFICATION

(11) **EP 2 635 025 B1**
(45) Date of publication and mention of the grant of the patent: **08.04.2015**
(21) Application number: 12157589.8
(22) Date of filing: 29.02.2012
(51) Int. Cl.: H04N 5/783, H04N 21/231, H04N 9/804

(54) **Video processing method and video appliance implementing the method**
Videoverarbeitungsverfahren und Videoanwendung damit
Procédé de traitement vidéo et appareil vidéo mettant en oeuvre le procédé

(43) Date of publication of application: 04.09.2013
(73) Proprietor: Advanced Digital Broadcast S.A., 1292 Chambesy (CH)
(72) Inventor: Zalewski, Marcin, 65-119 Zielona Gora / PL (PL)
(74) Representative: Di Bernardo, Antonio

(56) References cited:
- EP-A1- 1 156 674
- US-B1- 6 751 400
- US-B1- 6 801 710

## Description

### TECHNICAL FIELD

The present invention relates to the field of video processing methods and in particular to video processing methods for reverse play (rewind) of a video stream.

The invention has preferred application in video appliances, like set-top-boxes, with limited memory available for video processing.

### BACKGROUND ART

Digital video streams consist of a plurality of video frames that shall be displayed in sequence; the higher quality of the video streams, the greater the size, in bytes, of the corresponding stream.

In order to reduce required transmission bandwidth or required storage space, it is well known to compress video streams according to different compression standards.

MPEG video employs three different compression algorithms for compressing frames: I-frames, which do not need other frames to be decoded (intracoded frames), P-frames, which need one previous P-frame to be decoded (intercoded frames), and B-frames, which need both previous and next I or Pframe to be decoded (intercoded frames).

MPEG video streams therefore comprise sequences of I, P and B frames. Length of a video sequence depends on the content of the video stream and can be up to several Mb.

While in forward play only few video frames shall be buffered in order to display the correct sequence of video frames, rewind requires all frames of the video sequence to be stored in order to decode the last frame of the sequence, i.e. the frame that shall be displayed first in reverse mode.

Majority of video appliances, like set-top-boxes (STBs) and TV sets do not have such a big RAM memory for buffering all the video frames of a long video sequence, rewind of the video stream therefore requires some tricks.

In particular, such a problem is furthermore felt when the video appliance is required to support "trick modes", i.e. playing (forward or reverse) of the video stream at different speeds. In this case, if speed is higher than x1, additional frames shall be added to the frame sequence to be displayed.

In order to reduce the amount of buffer necessary to reverse play an MPEG video, it is known to display only I-frames when the video appliance is operated in rewind mode. Nevertheless, this solution has the drawback of a stepped video output which could be annoying for a user.

US patent 6,327,421, in name of IBM, discloses a method for realizing a fast-forward play and rewind in MPEG delivery systems including video servers and clients. A bit stream of the original sequence of MPEG compressed pictures is stored for normal play. Then a sub-sequence of the original sequence, consisting of every n-th picture, is compressed as I-pictures, while ensuring that all pictures in the compressed stream have equal numbers of bits. This stream is called ancillary stream. A client request for fast-forward play is responded to by a video server transmitting a subset of I-pictures from the ancillary stream. A fast-reverse play request is satisfied in the same manner except that the I-frames are transmitted in the reverse order.

The solution proposed by US 6,327,421 is not satisfactory because in order to obtain a smooth rewind of the video, it is necessary to generate an ancillary video stream with a lot of I-frames, which, as it is known, are not compressed too much.

Additionally, the solution disclosed by US 6,327,421 provides for generating a reversed video stream in a location that is remote with respect to the video appliance operated by a user. This solution, therefore, cannot be used for a local rewind of a video stream, i.e. in a single video appliance that is not connected to a remote video server.

Document EP1156674, which is considered to be the closest prior art, discloses a method for reverse playback of MPEG video streams which makes use of a first memory (5) for storing the video stream and of three reconstruction buffers (26) each for storing a decoded picture (par. [0036]). An Overall trickmode Control software module specifies, which picture must be decoded or displayed (par. [0041]). The picture identified by the Overall trickmode Control software is transferred by a Stream Access manager from the first memory (5) to a video decoder (9) (par. [0048]). The Overall trick mode Control software specifies the reconstruction buffer that shall store the decoded picture (par [0046]) and the decoding and/or displaying of die transferred picture (pat. [0051]) to a Video decoding Manager which interacts with a Video Display manger in order to access reconstruction buffers that could be occupied by pictures to be displayed (par. [0051]). Decoding of a picture can be a recursive process (par. [0061]) which can require a same picture to be decoded and buffered several times for decoding and/or displaying of several other pictures, as can be seen from figure 7 of D1, wherein picture P5 is decoded and buffered several times.

Releasing of the reconstruction buffers 26 is controlled by the video display process.

D1 does not disclose keeping a list of the decoded pictures, but only teaches to keep a list of the predictors (information available in the trickmode tables of par. [0070]) in order to decode them recursively.

D1 also does not disclose the following feature of claim 1, that if not all reference frames have been decoded and are actually buffered, decoding all reference frames of the selected frame that are not in the list of decoded frames and buffering the relative decoded reference frame, wherein if no buffer memory is available for buffering one decoded frame the buffer storing the oldest decoded frame not present in a list of frames to be display and not storing a reference frame for the selected frame is released and the decoded frame is buffeted in the released buffer.

There is therefore the need for a smooth rewind which does not require allocating a huge amount of resources.

### OBJECTS AND SUMMERY OF INVENTION

It is therefore an object of the present invention to present a video processing method and a video appliance overcoming rewind drawbacks of known video appliances.

In particular it is an object of the present invention to present a method for fast rewind of a video stream which allows a smooth view of the video stream being displayed.

It is also an object of the present invention to present a video appliance, and in particular a set-top-box, which allows generation of an output video stream that, once displayed on a screen, does not present rush passages from one picture to another.

These and further objects of the present invention are achieved by means of a video processing method and a video appliance comprising the features of the annexed claims, which are integral part of the present description.

Inventors have thought of a video processing method for generating a reverse video stream from an original video stream. Coded frames of the original video stream are buffered and decoded, whereby a reverse video stream is generated wherein the decoded frames are organized according to an order which is opposite to the display order of the original video stream. According to the method, a frame to be displayed is selected between frames of the original video stream, selection of the frame being made based on the frames display order of the reverse video stream. The method further provides for checking in a list of decoded frames if all reference frames of the original video stream necessary to decode the selected frame have already been decoded and the relative decoded frames are actually buffered. If all reference frames have been decoded and are actually buffered, then the selected frame is decoded. If not all reference frames have been decoded and are actually buffered, the method provides for decoding all reference frames of the selected frame that are not in the list of decoded frames and buffering the relative decoded reference frames, wherein if no buffer memory is available for buffering one decoded frame, the buffer storing the oldest decoded frame not present in a list of frames to be displayed and not storing a reference frame for the selected frame is released and the decoded frame is buffered in the released buffer. Once the selected frame is decoded and buffered, a list of frames to be displayed is updated with order information for outputting the decoded selected frame as a frame of the reverse video stream. A next video frame of the original video stream is selected, to be the next video frame of the reverse video stream, then the selection and decoding steps of the method are repeated for said next video stream.

This solution has the advantage that frames of the reverse video stream are available in shorter time for displaying, since it is not necessary to decode and store all the video frames of the original video stream before output of the reverse video stream can start

In one embodiment, if one of the reference frames is not decoded and buffered, then the selection and decoding steps of the method are repeated recursively for the reference frame until said one reference frame has been decoded and buffered.

This recursive solution allows reducing the required buffer memory for implementing the method.

In the preferred embodiment, the video processing method is carried out in one single appliance. No external device generating ancillary streams is therefore necessary.

In the preferred embodiment, at least one video sequence of the reverse video stream comprises all frames of the original video stream. This solution provides for a smooth rewind.

In one embodiment, the method provides for buffering at least two MPEG video sequences of the original video stream, and if there's no buffer memory available for storing said two MPEG video sequences, the method provides for generating a reverse video stream according to a different method, e.g. by playing only I frames of the MPEG video sequence. This solution is flexible and efficient.

In one preferred embodiment, the method further comprises the step of indexing the buffered coded frames of the original video stream, so as to define the frame display order and implement the steps of frame selection and fame decoding. This solution allows a fast selection of the video frames to be displayed.

In one aspect, the invention is also directed to a computer program and a video appliance which are suitable for implementing the video processing method according to the teachings presented in the following description and claims.

### BRIEF DESCRIPTION OF THE DRAWINGS

Further features and advantages of the present invention will become apparent in the detailed description of preferred non-exclusive embodiments of a video processing method, and of relative systems for reverse play of a video stream, which are described as non-limiting examples of the invention with the help of the annexed drawings, wherein:
- Figure 1, schematically represents a video appliance according to the present invention;
- Figure 2 schematically represents an MPEG video stream,
- Figure 3 is a flow chart of a video processing method according to an embodiment of the invention;
- Figure 4 is a flow chart of a displaying thread of the video processing method of figure 3,
- Figure 5 is a flow chart of a sequence loading thread of the video processing method of figure 3.
- Figure 6 is a flow chart of a sequence decoding thread of the video processing method of figure 3.
- Figures 7 and 8 are flow charts of a frame decoding thread executed during the sequence decoding thread of figure 6.
- Figure 9 is a flow chart of a of a buffer releasing thread executed during the frame decoding thread of figure 7 and 8.
- Figure 10 schematically represents a list of frames to be displayed.

These drawings illustrate different aspects and embodiments of the present invention and, where appropriate, like structures, components, materials and/or elements in different figures are indicated by the same reference numbers.

### DETAILED DESCRIPTION OF THE INVENTION

While the invention is susceptible of various modifications and alternative constructions, certain illustrated embodiments thereof have been shown in the drawings and will be described below in detail. It should be understood, however, that there is no intention to limit the invention to the specific form disclosed, but, on the contrary, the invention is to cover all modifications, alternative constructions, and equivalents falling within the spirit and scope of the invention as defined in the claims.

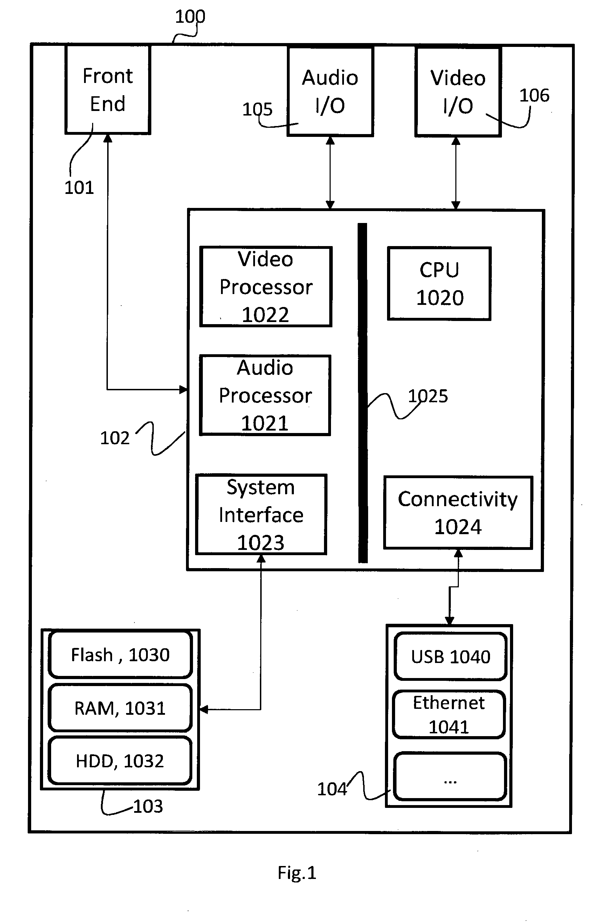

In the following description and in the figures, like elements are identified with like reference numerals. The use of "e.g.," "etc.," and "or" indicates non-exclusive alternatives without limitation unless otherwise noted. The use of "including" means "including, but not limited to," unless otherwise noted. Figure 1 schematically illustrates a video appliance 100. For sake of clarity only most important functional blocks of the video appliance 100 are represented in figure 1, while it is intended that further features can be provided on video appliance 100. In the following examples, video appliance 100 is a set top box, nevertheless, in other embodiments video appliance 100 can be any device suitable to output a video signal or to directly display a video signal on a screen; as an example, the video appliance can be a TV set, a DVR (Digital Video Recorder), a mobile phone or a palm computer.

Video appliance 100 comprises a front end 101 for receiving a digital television signal, in particular a transport stream comprising MPEG compressed video packets. Front end 101 comprises a tuner for tuning on a user selected video channel and for providing an IF (intermediate frequency) signal to a processor 102.

Processor 102 comprises a CPU (central processing unit, 1020), an audio processor 1021, a video processors 1022, a system interface block 1023, a connectivity block 1024. Communication between these blocks is achieved by means of a bus 1025, e.g. an IC2 bus.

Television signals from front end 101 are received by processor 102, wherein they are demodulated before a parser, executed by CPU 1020, separate video and audio packets of the received transport stream. While video packets are processed by video processor 1022, audio packets are processed by audio processor 1021.

System interface block 1023 allows communication with a memory block 103 comprising different type of memories: non-volatile memories 1030 (e.g. FLASH, NAND, NOR), volatile memories 1031 (RAM, DRAM) and storage devices 1032 (e.g. Hard Disk drivers HDD or solid state driver SDD).

Non-volatile memories stores drivers and applications necessary for the correct boot up and operation of the video appliance 100, while storage device are preferably used for storing recorded video streams. Non-volatile memories stores code portions of a computer program which is run by processor 102 for reverse playing of a video stream 200 as better illustrated in the following description.

Connectivity block 1024 is used for managing connection with external components 104, like USB ports 1040, Network Interface Cards 1041 communicating via Ethernet protocol, and so on.

Video appliance 100 further comprises audio I/O block 105 and video I/O block 106. Blocks 105 and 106 are used to receive audio and video from different sources, like a DVD reader, a Blu-Ray disk reader, an analog amplifier, a Video Cassette Recorder and so on. Blocks 105 and 106 further represent audio and video outputs, e.g. HDMI output to be provided to a TV set.

Processor 102 is therefore adapted to process MPEG A/V signals stored in storage device 1032 or received via front end 101 or via block 106 or via connectivity block 1024, e.g. IPTV (Internet Protocol Television) signals.

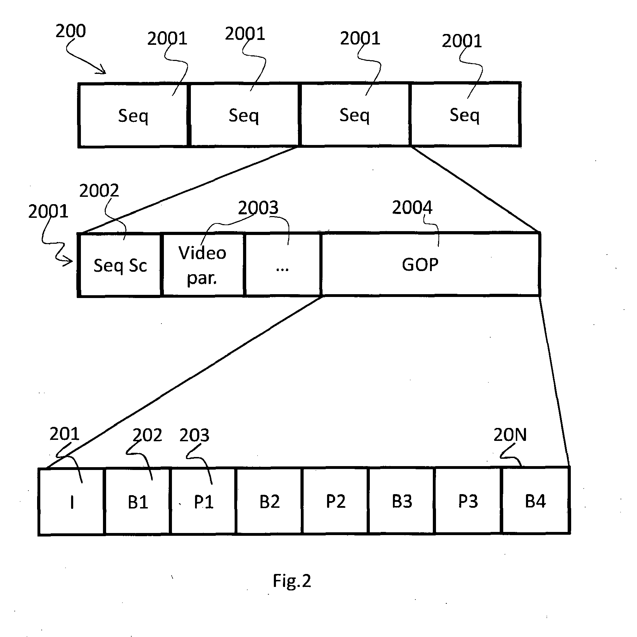

Figure 2 illustrates schematically a video stream 200 that can be received by a video appliance via any of the receiving means above described, e.g. via front end 101 or video I/O interface 106, or can be stored in the storage device 1032 of the video appliance 100.

The exemplary video stream 200 comprises a plurality of video sequences 2001, each one comprising a sequence header 2002, video and bit stream parameters 2003 and a group of pictures (GOP) 2004.

GOP is constituted by a sequence of I, P and B frames indicated with reference numbers 201-20N. In the embodiment of figure 2 the sequence of frames is I, B1, P1, B2, P2, B3, P3, B4.

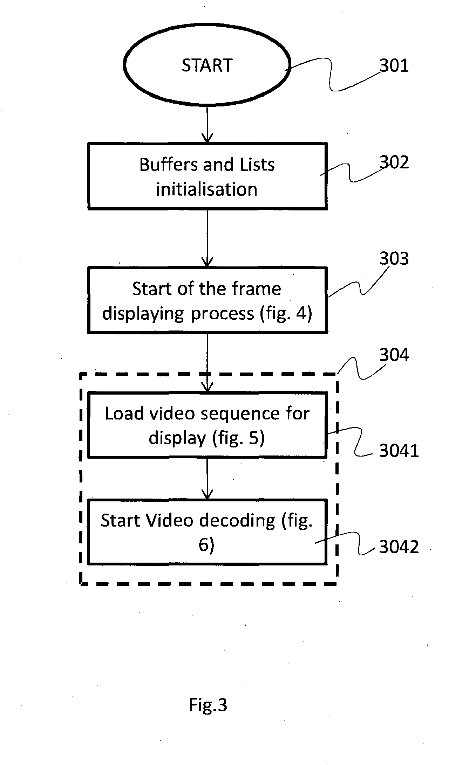

When video appliance 100 receives a command to rewind video stream 200, it starts a video processing method hereby described with reference to figures 3 to 9.

Upon reception of a rewind command (step 301), the processor 102 initialises (step 302) buffers and memory lists that will be used (as better described here below) for reverse play of the video stream.

Two threads (303 and 304) are then started in parallel by the processor 102.

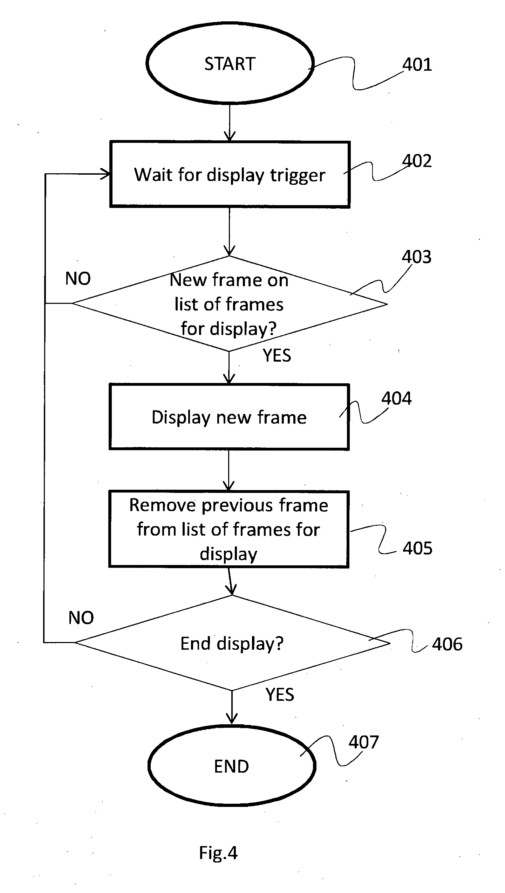

On one side, the processor 102 starts a frame displaying thread 303 which will be described with reference to figure 4, while on the other hand the processor 102 starts a video processing thread 304 intended to output the video frame to be displayed by the frame display thread 303. As better detailed in the following description, the thread 304 is mainly focused on two steps: loading a video sequence to be displayed (step 3041) and decoding it (step 3042) according to a smart algorithm.
When the frame displaying thread 303 is started (step 401), it keeps waiting for a trigger to start displaying of a video frame (step 402). In one embodiment, a display trigger is generated by a clock based on a frame display frequency on the Video Output 106. As an example for 50Hz output, a trigger will be generated each 20ms.

Display trigger can be interrupted for example in case a user stops playback of the video and stills on one image.

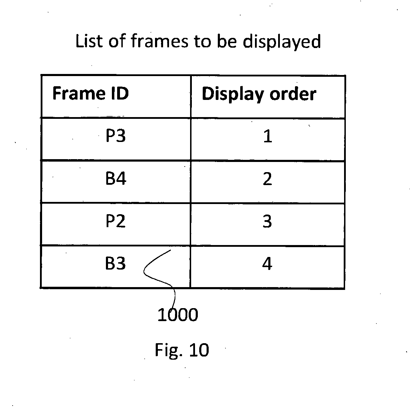

If a display trigger is received, then the thread 303 checks on a list of frames to be displayed 1000 if there's a frame to be displayed (step 403). In one embodiment, the list of frames to be displayed is a table mapping a frame ID to a display order, as shown in figure 10, which specifies a list of frames to be displayed according to one embodiment of the present invention. Since display order of the video frames is also stored in other tables (e.g. in the sequence indexing table that will be described below), the list of frames to be displayed can be reduced to a sequence of frame ID stored in a buffer memory and periodically updated.

If no frame is on the list, the process goes back to step 402, waiting for a new display trigger. If the list of frames to be displayed 1000 is not void, then the first frame to be displayed is provided to the video I/O 106 for displaying (step 404). The frame that has been displayed is then removed from the list 1000 (step 405) and the process goes to a decisional step 406 wherein processor 102 checks if the display thread 303 shall end. Such a decision can be taken based on user commands, e.g. because a request to switch off the video appliance has been received by the processor 102 via a user interface, e.g. an infra-red receiver receiving commands from a remote control operated by a user of the video appliance. Alternatively such a decision can be taken independently from user's commands, e.g. because end of stream has been reached, or a serious error in decoding has taken place.

If no decision to interrupt the display thread 303 is taken, then the process goes back to step 402 waiting for a new display trigger.

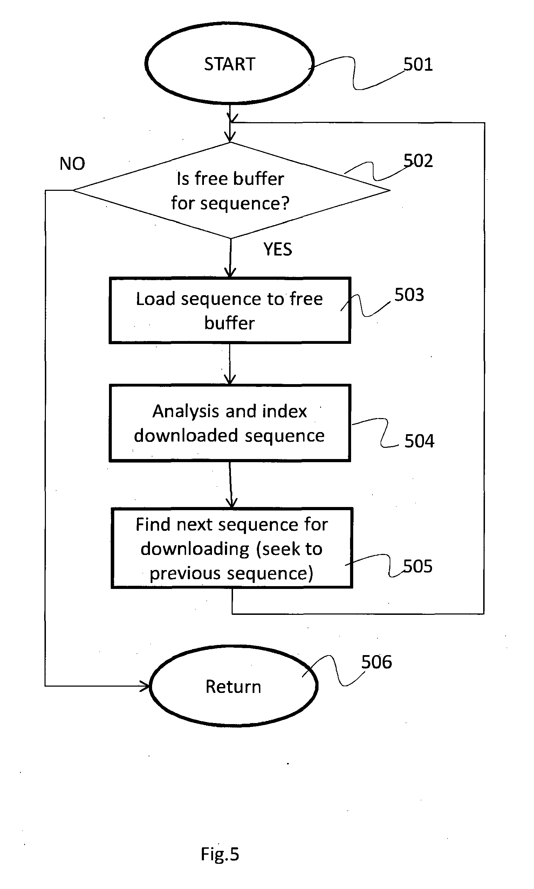

The way frames of video stream 200 are processed for reverse playback and get ready for display, depends on the video processing thread 303 which is now described with reference to figures 5 to 9.

First of all, the video processing thread checks whether there's enough memory available for buffering the video sequence 2001 to be played back (step 502). In the preferred embodiment, video appliance 100 comprises 8 Mb of buffer memory, which is usually sufficient to store two 1.5s long video sequences 2001 of an High Definition (HD) video stream.

If there's enough buffer memory available, then the video sequence to be processed is loaded (step 503) in the buffer memory and the video sequence is analysed and indexed. In particular, video appliance 100 allocates a predetermined memory area of block 103 for storing a sequence indexing table which, in one embodiment, is of the type illustrated in table I and is filled in once video sequence has been loaded:

**Table I**

| Frame ID | Frame Type | Display order | Frame references | Decoded |
|---|---|---|---|---|
| I | I | 7 | -- | -- |
| B1 | B | 8 | I | -- |
| P1 | P | 5 | I, Last P frame from previous sequence | -- |
| B2 | B | 6 | I, P1 | -- |
| P2 | P | 3 | P1 | -- |
| B3 | B | 4 | P1, P2 | -- |
| P3 | P | 1 | P2 | -- |
| B4 | B | 2 | P2, P3 | -- |

Table I is a sequence indexing table that has been filled in for the first sequence illustrated in figure 2.

Table I comprises for each frame a frame ID that, in the above example, is identified as I, B1, B2 etc... in order to allow easy understanding of the table; nevertheless, frame ID can be any other number or code that can be used by processor 102 to retrieve a frame in the buffers.

Table I further comprises:
- a "frame type" field, which is necessary to understand the type of compression (e.g. B frame or P frame or I frame);
- a "display order" field, which indicates in which order the frame shall be displayed;
- a "frame references" field which, for each frame, contains indication of the reference frames necessary to decode it;
- a "decoded" field, which contains a value (e.g. a flag or a number, like 0 or 1) indicating if the corresponding frame has been decoded and the decoded frame is currently buffered. This field will therefore be updated during reverse playing of the video stream 200.

Once the sequence indexing table has been filled in for the first video sequence, the method goes to step 505, wherein processor 102 selects the next video sequence to be processed, i.e. the next video sequence to be displayed in the playback mode.

If there's not enough buffer memory for storing the video sequence to be processed, then the sequence loading thread returns (step 506) to steps 3041 ending the sequence loading thread. Next, smooth decoding according to the present description is aborted and the method provides for switching to another backward trick playing mode (e.g. playing only I frames of video stream 200).

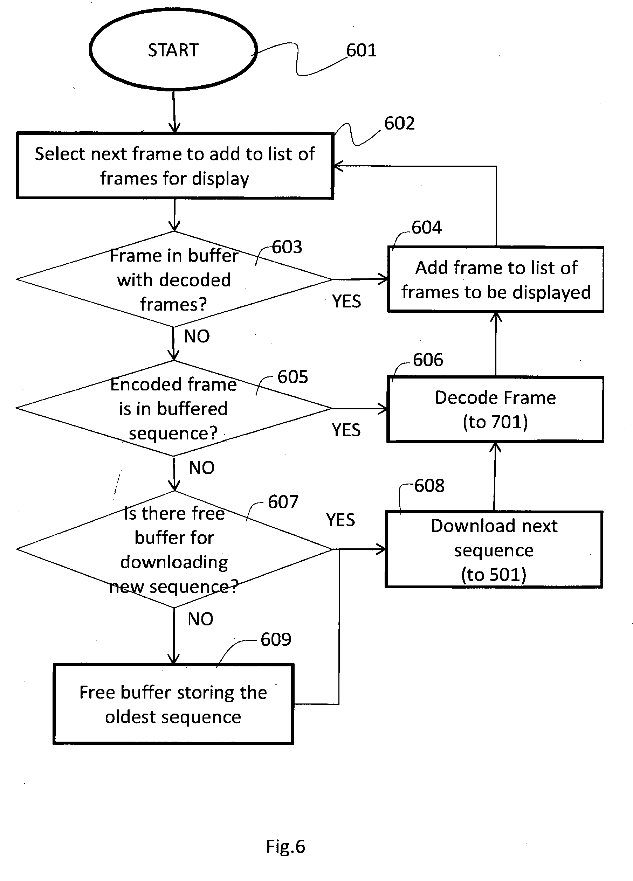

After a video sequence has been buffered and analysed, the video processing thread 304 provides for selecting and decoding frames to be displayed. This process is presented with reference to figures 6 to 9.

Based on the sequence indexing table, and in particular on the "display order" field, the processor 102 selects the next frame to be added to the list of frames to be displayed (step 602).

If the selected frame has already been decoded and is stored in the buffer memory (step 603), then the selected frame is added (step 604) to the list of frames to be displayed. This is done by simply updating a field of the list of frames to be displayed.

If the selected frame has not been decoded, then processor 102 checks (step 605) if the selected frame is a frame of the video sequence that has been stored at step 503. If yes, then the processor 102 decodes the frame (step 606) and adds it to the list of frames to be displayed (step 604).

If the selected frame is not a decoded frame (step 603), nor a frame of the video sequence currently buffered (step 605), then this means that the new frame to be decoded belongs to a different video sequence. The processor 102 therefore checks if there's enough free memory space for buffering a new video sequence (step 607).

If there's enough buffer available for storing the new video sequence, then the processor 102 provides for buffering the new video sequence (step 608), decoding the selected frame (step 606) and adding the decoded frame to the list of frames to be displayed (step 604).

If there's not enough space, the processor 102 frees the buffer memory storing the oldest video sequence (step 609), i.e. the video sequence that has been buffered before the other currently being buffered. Once buffer memory has been freed, the processor 102 provides for buffering the new video sequence (step 608), decoding the selected frame (step 606) and adding the decoded frame to the list of frames to be displayed (step 604).

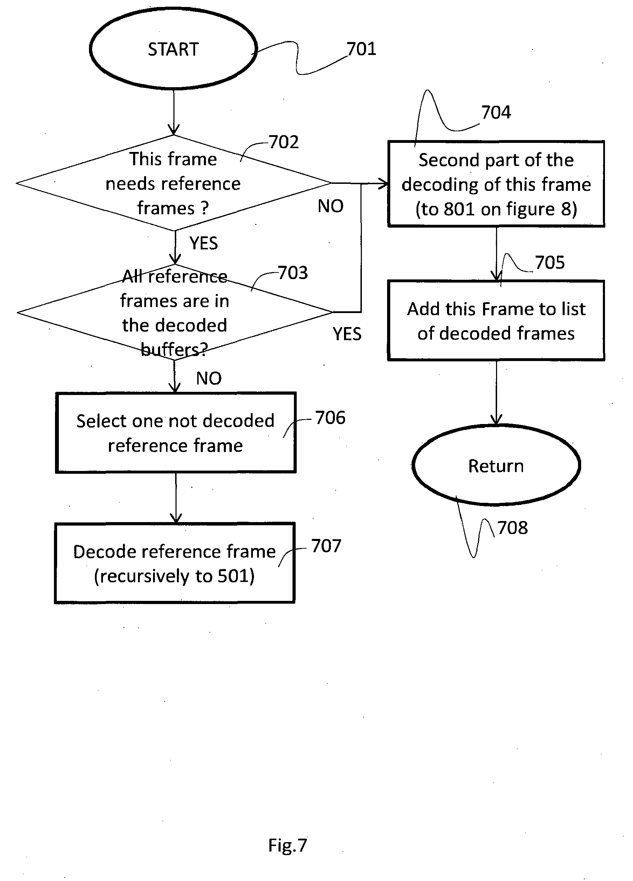

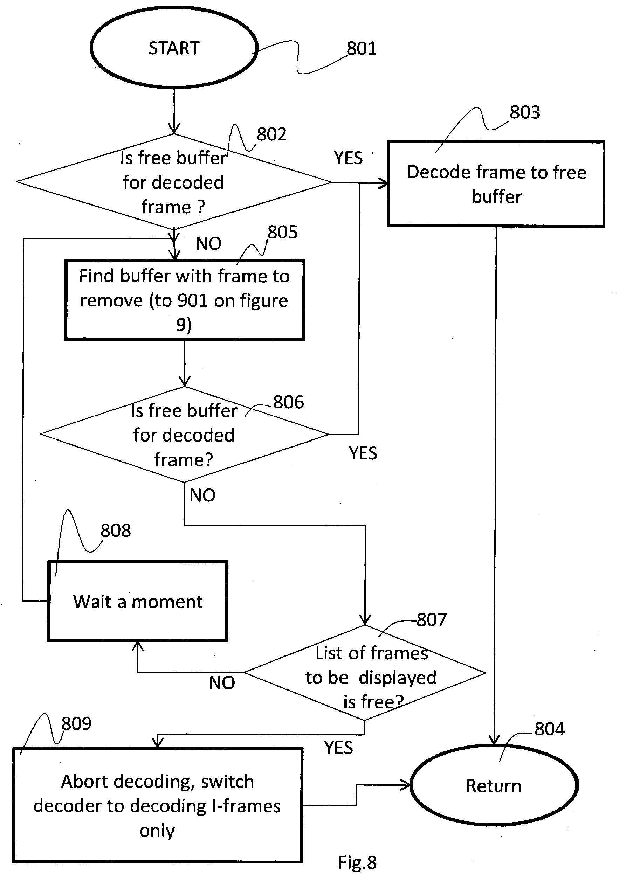

Once a new frame shall be decoded, a decoding thread is executed which is disclosed with reference to figures 7 and 8.

After the decoding thread is started (step 701) video sequence indexing table is checked by the processor 102 in order to evaluate (step 702) if the frame is interframe compressed and if it needs any reference frame to be decoded.

If no frame is needed for decoding the frame (frame is therefore intraframe compressed, e.g. it is an I frame), then the frame is decoded (step 704) and added to a list of frames to be decoded (step 705), or alternatively the "decoded" status of the sequence indexing table (see Table I) is modified for the decoded frame.

If the frame to be decoded needs any reference frame to be decoded (e.g. in the example of figure 2 frame P3 needs frame P2 to be decoded), then the processor 102 checks (step 703) if all frames necessary for decoding have already been decoded and are actually buffered. If this is the case, then the frame is decoded (step 704).

If all reference frames necessary for decoding are not buffered, then processor 102 selects (step 706) one of the reference frames that has not been decoded and the decoding thread is repeated recursively (step 707): steps 701 to 707 are therefore repeated until the frame for which the frame decoding thread is started is decoded and added to the list of frames to be displayed. Decoding thread is then terminated (step 708).

Figure 8 discloses a flow diagram of the decoding thread that is started at step 704, when decoding of the frame actually takes place.

The processor 102 checks (step 802) if there's free buffer for storing the frame once decoded; if buffer memory is available, then the processor 102 decodes the frame (step 803) and process returns (step 804) to step 705 for adding the frame to the list of decoded frames or alternatively for updating the "decoded" status of the sequence indexing table (see Table I) for the decoded frame.

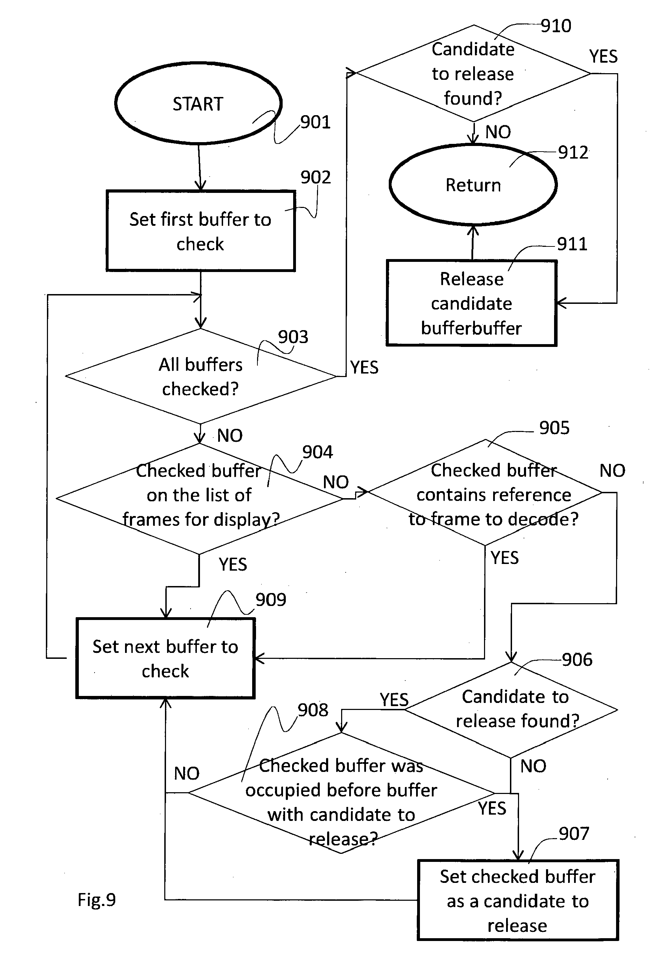

If there's no buffer available for the frame once decoded, the processor 102 starts (step 805) a thread to find out a buffer that can be freed. Details of this thread are described with reference to figure 9.

The processor 102 selects a first buffer to be checked (step 902). In one embodiment, frame buffers are organized in a list, or in a table, therefore this first buffer to be checked is selected as the first element on the list, or table, of frame buffers.

The processor 102 then checks if all buffers have been checked (step 903). If not, then the processor 102 checks (step 904) if the checked buffer is one storing a frame to be displayed, this is preferably done by checking the list of frames to be displayed, which also contains a reference to the buffer storing the frame.

If the buffer presently checked is one storing a frame on the list of frames to be displayed, then this buffer cannot be released and processor 102 selects the next buffer to be checked (step 909).

If the buffer presently checked is not the buffer storing a frame being on the list of frames to be displayed, the processor 102 checks (step 905) if the buffer contains a reference frame necessary for decoding the frame to be decoded.

If the buffer currently checked stores a reference frame, then this cannot be released, otherwise the frame to be decoded could not be decoded. The processor 102 therefore selects the next buffer to be checked (step 909). If buffer currently checked does not store such a reference frame, then it is a good candidate for being released.

The processor 102 then checks (step 906) if a candidate buffer for release was already found. If not, then the buffer currently checked is set as a candidate for release (step 907). If a candidate for release was already found, processor 102, then checks if the new candidate buffer was occupied before the previous candidate buffer (step 908). If yes, then the buffer currently checked is set as a candidate to be released (step 907), if not, then a new buffer is checked: processor 102 selects a new buffer to be checked (step 909) and the process is repeated until all buffers have been checked. At this point processor 102 checks (step 910) if a candidate for release has been found, and in case of positive the buffer is released (step 911) and the releasing thread of step 805 terminated (step 912). If no candidate was found, then the releasing thread of step 805 is terminated (step 912) without freeing any buffer.

After the buffer releasing thread has been terminated, the processor 102 checks if any free buffer for storing the frame to be decoded has been found (step 806). If such a buffer has been found, then the processor 102 decodes the frame to be decoded (step 803), the decoding thread is terminated (step 804) and the process returns to step 705, wherein the decoded frame is added to the list of decoded frames (or alternatively the "decoded" status of the sequence indexing table is updated). The process then continues by adding the decoded frame to the list of frames to be displayed (step 604) and a new frame to be added to the list of frames to be displayed is selected by the processor 102 (step 602).

If at step 806 no buffer is available for storing the frame to be decoded, then the method provides for checking (step 807) if the list of frames to be displayed is free, i.e. if there's no frame to be displayed. If some frame is decoded and ready to be displayed, then the method provides for waiting a moment (step 808), in particular few tens of milliseconds, and then repeating the buffer releasing thread 805.

If no buffer is available for storing the frame to be decode, and no frame is currently in the list of frames to be displayed, then the method goes to step 809 and the smooth rewind according to the present description is aborted and the method provides for switching to another backward trick playing mode (e.g. playing only I frames of video stream 200.

It is clear from the above description that a video processing method as above described fulfils the objectives of the present application.

It can be easily recognised, by one skilled in the art, that the aforementioned method for video processing may be performed and/or controlled by one or more computer programs. Such computer programs are typically executed by utilizing the computing resources in a computing device such as personal computers, personal digital assistants, cellular telephones, receivers and decoders of digital television or the like. Applications are stored in non-volatile memory, for example a flash memory or volatile memory, for example RAM and are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept.

The presented preferred embodiments are exemplary only, and are not exhaustive of the scope of the technical concept presented herein. Accordingly, the scope of protection is not limited to the preferred embodiments described in the specification, but is only limited by the claims that follow.

The described method is applicable to all video compression solutions based on similar schemes i.e. frames, groups of pictures and sequences including intracoded and intercoded frames. For example the described video processing method can be applied to MPEG1, MPEG2, MPEG4 part 2 (eg. DIVX, XViD), MPEG4 part 10 (h.264), VC1 or VP8.

## Claims

1. A video processing method for generating a reverse video stream from an original video stream, comprising the steps of:
- Buffering coded frames of the original video stream;
- decoding the buffered coded frames and
- generating a reverse video stream wherein the decoded frames are organized according to an order which is opposite to the display order of the original video stream;
and comprising the steps of:
a) selecting (602) between frames of the original video stream a frame to be displayed, selection of the frame being made based on the frames display order of the reverse video stream;
b) checking (702-703) in a list of decoded frames if all reference frames of the original video stream necessary to decode the selected frame have already been decoded and the relative decoded frames are actually buffered;
c) if all reference frames have been decoded and are actually buffered, go to step d), if not all reference frames have been decoded and are actually buffered, decoding (706-707) all reference frames of the selected frame that are not in the list of decoded frames and buffering the relative decoded reference frame, wherein if no buffer memory is available for buffering one decoded frame the buffer storing the oldest decoded frame not present in a list of frames to be displayed (1000) and not storing a reference frame for the selected frame is released and the decoded frame is buffered in the released buffer (901-912),
d) decoding the selected frame and buffering the decoded selected frame;
e) updating (604) a list of frames to be displayed with order information for outputting the decoded selected frame as a frame of the reverse video stream,
f) selecting (602) a next video frame of the original video stream, said next video frame being the next video frame of the reverse video stream,
g) repeating steps a) to e) for said next video stream.

2. The method of claim 1, wherein if one of said reference frames is not decoded and buffered, then said one reference frame to be decoded is taken as the selected frame of step b) and steps c) to d) are repeated recursively until said one reference frame has been decoded and buffered.

3. The method of claim 1 or 2, wherein the method is carried out in one single appliance.

4. The method of claim 1 or 2 or 3, further comprising the step of displaying decoded frames included in the list of frames to be displayed.

5. The method according to any of the previous claims, wherein at least one video sequence of the reverse video stream comprises all frames of the original video stream.

6. The method according to any of the previous claims, wherein the method provides for buffering at least two MPEG video sequences of the original video stream, and wherein, if there's no buffer memory available for storing said two MPEG video sequences, the method provides for generating a reverse video stream according to a method different to the one of steps d) to g).

7. The method according to any of the previous claims, further comprising the step of indexing the buffered coded frames of the original video stream, so as to define the frame display order and implement the steps of frame selection and fame decoding.

8. A computer program product loadable in a memory of a video appliance and comprising code portions that, once run by a processor of the video appliance, execute the method according to any of claims 1 to 7.

9. A computer readable medium storing computer-executable instructions performing all the steps of the computer-implemented method according to any of claims 1 to 7 when executed on a computer.

10. A video appliance comprising
memory buffers for temporary storing frames of an original video stream,
a control unit responsive to a reverse play command for processing the original video stream and generating a reverse video stream by decoding frames of the original video stream according to an order which is opposite to the display order of the original video stream;
said control unit is adapted to:
a) select (602) between frames of the original video stream a frame to be displayed, selection of the frame being made based on the frames display order of the reverse video stream;
b) check (702-703) in a list of decoded frames if all reference frames of the original video stream necessary to decode the selected frame have already been decoded and the relative decoded frames are actually buffered;
c) if all reference frames have been decoded and are actually buffered, go to step d), if not all reference frames have been decoded and are actually buffered, decoding (706-707) all reference frames of the selected frame that are not in the list of decoded frames and buffering the relative decoded reference frame, wherein if no buffer memory is available for buffering one decoded frame the buffer storing the oldest decoded frame not present in a list of frames to be displayed (1000) and not storing a reference frame for the selected frame is released and the decoded frame is buffered in the released buffer (901-912),
d) decode the selected frame and buffering the decoded selected frame;
e) update (604) a list of frames to be displayed with order information for outputting the decoded selected frame as a frame of the reverse video stream,
f) select (602) a next video frame of the original video stream, said next video frame being the next video frame of the reverse video stream,
g) repeat steps a) to e) for said next video stream.

11. The video appliance of claim 10, wherein if one of said reference frames is not decoded and buffered, then said control unit is adapted to take said one reference frame to be decoded as the selected frame of step b) and is adapted to repeat steps c) to d) recursively until said one reference frame has been decoded and buffered.

12. The video appliance of claim 10 or 11, further comprising a display device adapted to display decoded frames included in the list of frames to be displayed.

13. The video appliance according to any of claims 10 to 12, wherein at least one video sequence of the reverse video stream comprises all frames of the original video stream.

14. The video appliance according to any of claims 10 to 13, wherein the memory buffers are adapted to buffer at least two consecutive MPEG video sequences of the original video stream, and wherein, if there's no buffer memory available for storing said two consecutive MPEG video sequences, the control unit is adapted to generate a reverse video stream according to a method different to the one of steps d) to g).

## Patentansprüche

1. Videoverarbeitungsverfahren zum Erzeugen eines umgekehrten Videostroms anhand eines ursprünglichen Videostroms, welches die folgenden Schritte umfasst:
- Puffern codierter Rahmen des ursprünglichen Videostroms,
- Decodieren der gepufferten codierten Rahmen und
- Erzeugen eines umgekehrten Videostroms, wobei die decodierten Rahmen in einer Reihenfolge organisiert werden, welche der Anzeigereihenfolge des ursprünglichen Videostroms entgegengesetzt ist, und folgende Schritte umfasst:
a) Auswählen (602) eines anzuzeigenden Rahmens aus Rahmen des ursprünglichen Videostroms, wobei die Auswahl des Rahmens auf der Grundlage der Rahmenanzeigereihenfolge des umgekehrten Videostroms erfolgt,
b) Prüfen (702 - 703) in einer Liste decodierter Rahmen, ob alle Referenzrahmen des ursprünglichen Videostroms, die erforderlich sind, um den ausgewählten Rahmen zu decodieren, bereits decodiert wurden, und ob die jeweiligen decodierten Rahmen tatsächlich gepuffert sind,
c) falls alle Referenzrahmen decodiert wurden und tatsächlich gepuffert wurden, Übergang zu Schritt d), falls nicht alle Referenzrahmen decodiert wurden und tatsächlich gepuffert wurden, Decodieren (706 - 707) aller Referenzrahmen des ausgewählten Rahmens, die nicht in der Liste decodierter Rahmen sind, und Puffern des jeweiligen decodierten Referenzrahmens, wobei, falls kein Pufferspeicher für das Puffern eines decodierten Rahmens verfügbar ist, der Puffer, welcher den ältesten decodierten Rahmen speichert, der nicht in einer Liste anzuzeigender Rahmen vorhanden ist (1000), und keinen Referenzrahmen für den ausgewählten Rahmen speichert, freigegeben wird und der decodierte Rahmen im freigegebenen Puffer gepuffert wird (901 - 912),
d) Decodieren des ausgewählten Rahmens und Puffern des decodierten ausgewählten Rahmens,
e) Aktualisieren (604) einer Liste anzuzeigender Rahmen mit Reihenfolgeinformationen zum Ausgeben des decodierten ausgewählten Rahmens als einen Rahmen des umgekehrten Videostroms,
f) Auswählen (602) eines nächsten Videorahmens des ursprünglichen Videostroms, wobei der nächste Videorahmen der nächste Videorahmen des umgekehrten Videostroms ist,
g) Wiederholen der Schritte a) bis e) für den nächsten Videostrom.

2. Verfahren nach Anspruch 1, wobei, falls einer der Referenzrahmen nicht decodiert und gepuffert wird, der eine zu decodierende Referenzrahmen als der ausgewählte Rahmen von Schritt b) genommen wird und die Schritte c) bis d) rekursiv wiederholt werden, bis der eine Referenzrahmen decodiert und gepuffert wurde.

3. Verfahren nach Anspruch 1 oder 2, wobei das Verfahren in einem einzigen Gerät ausgeführt wird.

4. Verfahren nach Anspruch 1, 2 oder 3, welches ferner den Schritt des Anzeigens decodierter Rahmen, die in der Liste anzuzeigender Rahmen enthalten sind, umfasst.

5. Verfahren nach einem der vorhergehenden Ansprüche, wobei wenigstens eine Videosequenz des umgekehrten Videostroms alle Rahmen des ursprünglichen Videostroms umfasst.

6. Verfahren nach einem der vorhergehenden Ansprüche, wobei das Verfahren das Puffern wenigstens zweier MPEG-Videosequenzen des ursprünglichen Videostroms vorsieht und wobei, falls kein Pufferspeicher für das Speichern der beiden MPEG-Videosequenzen verfügbar ist, das Verfahren das Erzeugen eines umgekehrten Videostroms nach einem von einem der Schritte d) bis g) verschiedenen Verfahren vorsieht.

7. Verfahren nach einem der vorhergehenden Ansprüche, welches ferner den Schritt des Indexierens der gepufferten codierten Rahmen des ursprünglichen Videostroms, um die Rahmenanzeigereihenfolge zu definieren, und das Implementieren der Schritte der Rahmenauswahl und der Rahmendecodierung umfasst.

8. Computerprogrammprodukt, das in einen Speicher eines Videogeräts ladbar ist und Codeabschnitte umfasst, die, sobald sie von einem Prozessor des Videogeräts ausgeführt werden, das Verfahren nach einem der Ansprüche 1 bis 7 ausführen.

9. Computerlesbares Medium, welches Computer-ausführbare Befehle speichert, welche alle Schritte des Computerimplementierten Verfahrens nach einem der Ansprüche 1 bis 7 ausführen, wenn sie auf einem Computer ausgeführt werden.

10. Videogerät, welches Folgendes umfasst:
Speicherpuffer zum Zwischenspeichern von Rahmen eines ursprünglichen Videostroms,
eine Steuereinheit, welche auf einen Umgekehrtes-Abspielen-Befehl anspricht, um den ursprünglichen Videostrom zu verarbeiten und einen umgekehrten Videostrom durch Decodieren von Rahmen des ursprünglichen Videostroms in einer Reihenfolge, die zur Anzeigereihenfolge des ursprünglichen Videostroms entgegengesetzt ist, zu erzeugen,
wobei die Steuereinheit dafür eingerichtet ist, Folgendes auszuführen:
a) Auswählen (602) eines anzuzeigenden Rahmens aus Rahmen des ursprünglichen Videostroms, wobei die Auswahl des Rahmens auf der Grundlage der Rahmenanzeigereihenfolge des umgekehrten Video-stroms erfolgt,
b) Prüfen (702 - 703) in einer Liste decodierter Rahmen, ob alle Referenzrahmen des ursprünglichen Videostroms, die erforderlich sind, um den ausgewählten Rahmen zu decodieren, bereits decodiert wurden, und ob die jeweiligen decodierten Rahmen tatsächlich gepuffert sind,
c) falls alle Referenzrahmen decodiert wurden und tatsächlich gepuffert wurden, Übergang zu Schritt d), falls nicht alle Referenzrahmen decodiert wurden und tatsächlich gepuffert wurden, Decodieren (706 - 707) aller Referenzrahmen des ausgewählten Rahmens, die nicht in der Liste decodierter Rahmen sind, und Puffern des jeweiligen decodierten Referenzrahmens, wobei, falls kein Pufferspeicher für das Puffern eines decodierten Rahmens verfügbar ist, der Puffer, welcher den ältesten decodierten Rahmen speichert, der nicht in einer Liste anzuzeigender Rahmen vorhanden ist (1000), und keinen Referenzrahmen für den ausgewählten Rahmen speichert, freigegeben wird und der decodierte Rahmen im freigegebenen Puffer gepuffert wird (901 - 912),
d) Decodieren des ausgewählten Rahmens und Puffern des decodierten ausgewählten Rahmens,
e) Aktualisieren (604) einer Liste anzuzeigender Rahmen mit Reihenfolgeinformationen zum Ausgeben des decodierten ausgewählten Rahmens als einen Rahmen des umgekehrten Videostroms,
f) Auswählen (602) eines nächsten Videorahmens des ursprünglichen Videostroms, wobei der nächste Videorahmen der nächste Videorahmen des umgekehrten Videostroms ist,
g) Wiederholen der Schritte a) bis e) für den nächsten Videostrom.

11. Videogerät nach Anspruch 10, wobei, falls einer der Referenzrahmen nicht decodiert und gepuffert ist, die Steuereinheit dafür eingerichtet ist, den einen zu decodierenden Referenzrahmen als den ausgewählten Rahmen von Schritt b) zu nehmen, und dafür eingerichtet ist, die Schritte c) bis d) rekursiv zu wiederholen, bis der eine Referenzrahmen decodiert und gepuffert wurde.

12. Videogerät nach Anspruch 10 oder 11, welches ferner eine Anzeigevorrichtung umfasst, die dafür eingerichtet ist, decodierte Rahmen anzuzeigen, die in der Liste anzuzeigender Rahmen enthalten sind.

13. Videogerät nach einem der Ansprüche 10 bis 12, wobei wenigstens eine Videosequenz des umgekehrten Videostroms alle Rahmen des ursprünglichen Videostroms umfasst.

14. Videogerät nach einem der Ansprüche 10 bis 13, wobei die Speicherpuffer dafür eingerichtet sind, wenigstens zwei aufeinander folgende MPEG-Videosequenzen des ursprünglichen Videostroms zu puffern, und wobei, falls kein Pufferspeicher für das Speichern der zwei aufeinander folgenden MPEG-Videosequenzen verfügbar ist, die Steuereinheit dafür eingerichtet ist, einen umgekehrten Videostrom nach einem von dem einen der Schritte d) bis g) verschiedenen Verfahren zu erzeugen.

## Revendications

1. Procédé de traitement vidéo pour générer un flux vidéo inverse à partir d'un flux vidéo d'origine, comprenant les étapes consistant à :
- mettre en mémoire tampon des trames codées du flux vidéo d'origine ;
- décoder les trames codées mises en mémoire tampon ; et
- générer un flux vidéo inverse, les trames décodées étant organisées selon un ordre qui est opposé à l'ordre d'affichage du flux vidéo d'origine ;
et comprenant les étapes consistant à :
a) sélectionner (602), parmi des trames du flux vidéo d'origine, une trame à afficher, la sélection de la trame étant réalisée sur la base de l'ordre d'affichage de trames du flux vidéo inverse ;
b) vérifier (702-703) dans une liste de trames décodées si toutes les trames de référence du flux vidéo d'origine, nécessaires pour décoder la trame sélectionnée, ont déjà été décodées, et si les trames décodées relatives sont réellement mises en mémoire tampon ;
c) si toutes les trames de référence ont été décodées et sont réellement mises en mémoire tampon, aller à l'étape d), et, si toutes les trames de référence n'ont pas été décodées et ne sont pas réellement mises en mémoire tampon, décoder (706-707) toutes les trames de référence de la trame sélectionnée qui ne sont pas dans la liste de trames décodées, et mettre en mémoire tampon la trame de référence décodée relative ; si aucune mémoire tampon n'est disponible pour mettre en mémoire tampon une trame décodée, le tampon stockant la plus ancienne trame décodée non présente dans une liste de trames à afficher (1000) et ne stockant pas une trame de référence pour la trame sélectionnée est libéré, et la trame décodée est mise en mémoire tampon dans le tampon libéré (901-912) ;
d) décoder la trame sélectionnée et mettre en mémoire tampon la trame sélectionnée décodée ;
e) mettre à jour (604) une liste de trames à afficher à l'aide d'informations d'ordre pour délivrer en sortie la trame sélectionnée décodée sous la forme d'une trame du flux vidéo inverse ;
f) sélectionner (602) une trame vidéo suivante du flux vidéo d'origine, ladite trame vidéo suivante étant la trame vidéo suivante du flux vidéo inverse ;
g) répéter les étapes a) à e) pour ledit flux vidéo suivant.

2. Procédé selon la revendication 1, dans lequel, si l'une desdites trames de référence n'est pas décodée et mise en mémoire tampon, alors ladite trame de référence à décoder est prise en tant que la trame sélectionnée de l'étape b), et les étapes c) et d) sont répétées de manière récursive jusqu'à ce que ladite trame de référence ait été décodée et mise en mémoire tampon.

3. Procédé selon la revendication 1 ou 2, dans lequel le procédé est exécuté dans un seul appareil.

4. Procédé selon la revendication 1, 2 ou 3, comprenant en outre l'étape d'affichage des trames décodées comprises dans la liste de trames à afficher.

5. Procédé selon l'une quelconque des revendications précédentes, dans lequel au moins une séquence vidéo du flux vidéo inverse comprend toutes les trames du flux vidéo d'origine.

6. Procédé selon l'une quelconque des revendications précédentes, dans lequel le procédé permet la mise en mémoire tampon d'au moins deux séquences vidéo MPEG du flux vidéo d'origine, et dans lequel, s'il n'y a aucune mémoire tampon disponible pour stocker lesdites deux séquences vidéo MPEG, le procédé permet la génération d'un flux vidéo inverse selon un procédé différent de celui des étapes d) à g).

7. Procédé selon l'une quelconque des revendications précédentes, comprenant en outre l'étape d'indexation les trames codées mises en mémoire tampon du flux vidéo d'origine, de façon à définir l'ordre d'affichage de trame et à mettre en oeuvre les étapes de sélection de trame et de décodage de trame.

8. Produit programme d'ordinateur pouvant être chargé dans une mémoire d'un appareil vidéo et comprenant des parties de code qui, une fois exécutées par un processeur de l'appareil vidéo, exécutent le procédé selon l'une quelconque des revendications 1 à 7.

9. Support lisible par ordinateur stockant des instructions pouvant être exécutées par ordinateur, réalisant toutes les étapes du procédé mis en oeuvre par ordinateur selon l'une quelconque des revendications 1 à 7, lorsqu'il est exécuté sur un ordinateur.

10. Appareil vidéo comprenant :
des mémoires tampons pour stocker temporairement des trames d'un flux vidéo d'origine,
une unité de commande sensible à une instruction de lecture inverse pour traiter le flux vidéo d'origine et générer un flux vidéo inverse par décodage des trames du flux vidéo d'origine selon un ordre qui est opposé à l'ordre d'affichage du flux vidéo d'origine ;
ladite unité de commande est adaptée pour :
a) sélectionner (602), parmi des trames du flux vidéo d'origine, une trame à afficher, la sélection de la trame étant réalisée sur la base de l'ordre d'affichage de trames du flux vidéo inverse ;
b) vérifier (702-703) dans une liste de trames décodées si toutes les trames de référence du flux vidéo d'origine, nécessaires pour décoder la trame sélectionnée, ont déjà été décodées, et si les trames décodées relatives sont réellement mises en mémoire tampon ;
c) si toutes les trames de référence ont été décodées et sont réellement mises en mémoire tampon, aller à l'étape d), et, si toutes les trames de référence n'ont pas été décodées et ne sont pas réellement mises en mémoire tampon, décoder (706-707) toutes les trames de référence de la trame sélectionnée qui ne sont pas dans la liste de trames décodées, et mettre en mémoire tampon la trame de référence décodée relative ; si aucune mémoire tampon n'est disponible pour mettre en mémoire tampon une trame décodée, le tampon stockant la plus ancienne trame décodée non présente dans une liste de trames à afficher (1000) et ne stockant pas de trame de référence pour la trame sélectionnée est libéré, et la trame décodée est mise en mémoire tampon dans le tampon libéré (901-912) ;
d) décoder la trame sélectionnée et mettre en mémoire tampon la trame sélectionnée décodée ;
e) mettre à jour (604) une liste de trames à afficher à l'aide d'informations d'ordre pour délivrer en sortie la trame sélectionnée décodée sous la forme d'une trame du flux vidéo inverse ;
f) sélectionner (602) une trame vidéo suivante du flux vidéo d'origine, ladite trame vidéo suivante étant la trame vidéo suivante du flux vidéo inverse ;
g) répéter les étapes a) à e) pour ledit flux vidéo suivant.

11. Appareil vidéo selon la revendication 10, dans lequel, si l'une desdites trames de référence n'est pas décodée et mise en mémoire tampon, alors ladite unité de commande est adaptée pour prendre ladite trame de référence à décoder en tant que la trame sélectionnée de l'étape b) et est adaptée pour répéter les étapes c) et d) de façon récursive jusqu'à ce que ladite trame de référence ait été décodée et mise en mémoire tampon.

12. Appareil vidéo selon la revendication 10 ou 11, comprenant en outre un dispositif d'affichage adapté pour afficher des trames décodées comprises dans la liste de trames à afficher.

13. Appareil vidéo selon l'une quelconque des revendications 10 à 12, dans lequel au moins une séquence vidéo du flux vidéo inverse comprend toutes les trames du flux vidéo d'origine.

14. Appareil vidéo selon l'une quelconque des revendications 10 à 13, dans lequel les mémoires tampons sont adaptées pour mettre en mémoire tampon au moins deux séquences vidéo MPEG consécutives du flux vidéo d'origine, et dans lequel, s'il n'y a aucune mémoire tampon disponible pour stocker lesdites deux séquences vidéo MPEG consécutives, l'unité de commande est adaptée pour générer un flux vidéo inverse selon un procédé différent de celui des étapes d) à g).
